Europäisches Patentamt

European Patent Office

Office européen des brevets

(19)

(11) Veröffentlichungsnummer : **0 317 557 B1**

# EUROPÄISCHE PATENTSCHRIFT

(12)

(45) Veröffentlichungstag der Patentschrift :
27.02.91 Patentblatt 91/09

(51) Int. Cl.$^5$ : **G01N 7/14**

(21) Anmeldenummer : 87904484.0

(22) Anmeldetag : 17.07.87

(86) Internationale Anmeldenummer :
**PCT/AT87/00040**

(87) Internationale Veröffentlichungsnummer :
**WO 88/00692 28.01.88 Gazette 88/03**

---

(54) VERFAHREN UND VORRICHTUNG ZUR MESSUNG DES DAMPFDRUCKES VON FLÜSSIGKEITEN.

---

(30) Priorität : 18.07.86 AT 1961/86

(43) Veröffentlichungstag der Anmeldung :
31.05.89 Patentblatt 89/22

(45) Bekanntmachung des Hinweises auf die
Patenterteilung :
27.02.91 Patentblatt 91/09

(84) Benannte Vertragsstaaten :
AT BE DE FR GB IT LU NL SE

(56) Entgegenhaltungen :
FR-A- 2 474 196
GB-A- 832 085
GB-A- 974 183
US-A- 3 499 317

(73) Patentinhaber : GRABNER, Werner
Nussdorferstrasse 4/11
A-1090 Wien (AT)

(72) Erfinder : GRABNER, Werner
Nussdorferstrasse 4/11
A-1090 Wien (AT)

(74) Vertreter : Wallner, Gerhard, Dipl.-Ing.
c/o Waagner-Biro Aktiengesellschaft
Patentabteilung Stadlauer-Strasse 54
Postfach 11
A-1221 Wien (AT)

---

## Beschreibung

Die Erfindung bezieht sich auf ein Verfahren zur Messung des Dampfdruckes von Flüssigkeiten, bei welchem Verfahren die zu messende Flüssigkeit in eine zuvor evakuierte Meßzelle eingebracht wird und der Einfluß von in der Flüssigkeit gelösten Gasen auf das Meßergebnis ausgeschaltet wird. Weiter bezieht sich die Erfindung auf eine Vorrichtung zur Messung des Dampfdruckes von Flüssigkeiten.

Der Dampfdruck einer Flüssigkeit ist jener Druck, welcher sich in einem abgeschlossenen System über der Flüssigkeit aufbaut ; dieser Druck verändert sich so lange, bis der Dampf mit der Flüssigkeit in einem dynamischen Gleichgewicht steht. Der dann vorliegende Druck wird Sättigungsdampfdruck genannt und es ist dieser ausschließlich von der Temperatur des Systems und nicht von dessen Geometrie abhängig. Die in der Literatur veröffentlichten Werte für den Dampfdruck einer Substanz sind immer Sättigungsdampfdruckwerte, da nur diese substanzspezifisch angegeben werden können und nicht von der Meßmethode abhängen. Im Prinzip gesehen kann die Messung des Dampfdruckes einer Flüssigkeit so vorgenommen werden, daß diese Flüssigkeit in ein dicht verschließbares Gefäß, das mit einer Druckmeßvorrichtung versehen ist, gefüllt wird, das Gefäß verschlossen wird und der im Gefäß vorliegende Druck gemessen wird. Ist die Menge der Flüssigkeit ausreichend groß, daß bei der Meßtemperatur trotz Abdampfung noch ein Flüssigkeitsrest im Gefäß vorliegt, ist der Dampfdruck der Sättigungsdampfdruck. Diese, im Prinzip gesehen, einfachen Umstände werden dadurch verkompliziert, daß der Umgebungsluftdruck und der Druck von in der zu messenden Flüssigkeit gelöstem Gas die Messung wesentlich beeinflussen kann.

Die bisher angewendeten Techniken nehmen entweder eine Verfälschung des Meßergebnisses durch den Umgebungsluftdruck und den Druck des in der Flüssigkeit gelösten Gases in Kauf, wobei in manchen Fällen getrachtet wird, durch standardisierte Arbeitsvorschriften den Fehler annähernd gleichzuhalten, um die von verschiedenen Flüssigkeiten erhaltenen Meßergebnisse miteinander vergleichen zu können (z.B. Dampfdruckbestimmung nach Reid), oder es wird laboratoriumsmäßig unter überaus großem Arbeitaufwand getrachtet, nicht nur den Einfluß des Umgebungsluftdruckes auszuschalten, sondern auch die zu untersuchende Flüssigkeit vor der Messung von darin gelösten Gasen zu befreien. Bei den bekannten Techniken ergeben sich besonders große Schwierigkeiten, wenn der Dampfdruck von Flüssigkeitsgemischen bestimmt werden soll.

So ist in der GB-A-832 085 ein Verfahren zur Messung des Dampfdruckes von Flüssigkeiten beschrieben, bei dem zunächst die zu untersuchende Flüssigkeit in einen evakuierten Raum gebracht wird, in dem sich zur Bereitstellung einer großen Oberfläche ein körniges Material befindet ; es begünstigt die große Oberfläche den Austritt von in der Flüssigkeit gelösten Gasen. Nach dieser Vorbehandlung wird die Flüssigkeit in eine Flasche gefüllt, der evakuierbare Raum wird gereinigt, und es wird die Flüssigkeit danach wieder in den genannten Raum gefüllt, der darauf nochmals evakuiert wird und danach geschlossen wird, wonach der sich in diesem Raum einstellende Druck gemessen wird. Diese Vorgangsweise ist umständlich, und es ergeben sich bei Flüssigkeitsgemischen durch das Evakuieren Änderungen der Zusammensetzung. Es ist in der GB-A-832 085 weiter beschrieben, daß man die Menge eines in einer Flüssigkeit enthaltenen Gases, wenn der Dampfdruck dieser Flüssigkeit vernachlässigt werden kann, bestimmen kann, indem man diese Flüssigkeit in einen evakuierten Raum, in dem sich körniges Material befindet, einbringt und sowohl den im evakuierten Raum herrschenden Druck als auch den in diesem Raum danach von dem aus der Flüssigkeit ausgetretenen Gas aufgebauten Druck mißt und aus den dabei erhaltenen Druckmeßwerten unter Benützung der Beziehung p.v=R.T die auf Normaldruck und Normaltemperatur bezogene Menge des in der Flüssigkeit enthalten gewesenen Gases errechnet.

Ein Verfahren zur Bestimmung des Gasgehaltes einer Flüssigkeit ist auch in der GB-A-974 183 beschrieben. Auch bei diesem Verfahren wird die zu untersuchende Flüssigkeit in einen evakuierten Raum eingebracht, und es wird der in diesem Raum entstehende Druck gemessen ; das Volumen des Raumes, in dem sich die Flüssigkeit befindet, ist durch Verschieben eines kolbens veränderbar, und es werden zwei Messungen bei verschiedenen Stellungen des Kolbens vorgenommen. Der gemessene Druck ist jeweils aus dem Druck des Gases und dem Dampfdruck der Flüssigkeit zusammengesetzt. Es wird aus zwei Druckmeßwerten, unter der Annahme, daß der nicht bekannte Dampfdruck bei beiden Messungen den gleichen Wert hatte, die in der Flüssigkeit enthaltene Gasmenge errechnet.

Es ist ein Ziel der vorliegenden Erfindung, ein Verfahren zur Messung des Dampfdruckes von Flüssigkeiten zu schaffen, welches einfach durchführbar ist und sich gut zum betriebsmäßigen Einsatz eignet und dabei genaue Meßergebnisse liefert. Die Erfindung soll weiter auch eine Vorrichtung schaffen, welche eine einfache Durchführung des erfindungsgemäßen Verfahrens und das Erzielen einer guten Meßgenauigkeit erlaubt.

Das Verfahren der eingangs gennanten Art ist erfindungsgemäß, dadurch gekennzeichnet, daß die zu messende Flüssigkeit in zwei oder mehreren Portionen in die zuvor evakuierte Meßzelle eingebracht wird, wobei die auf die erste Flüssigkeitsportion folgende zweite Flüssigkeitsportion bzw. die folgenden Flüssigkeitsportionen jeweils zu der bereits in der Meßzelle befindlichen Flüssigkeit hinzugefügt wird bzw. werden und jeweils nach dem Einbringen einer Portion, nachdem sich das Sättigungsdampfdruck-Gleichgewicht eingestellt hat, der in der Meßzelle vorliegende Gesamtdruck gemessen wird, daß aus mindestens zwei der dabei bei gleicher Meßtemperatur erhaltenen Meßwerte, in denen die vom Dampfdruck der Flüssigkeit herrührende Druckkomponente gleich groß ist, unter Berücksichtigung der in den jeweiligen Flüssigkeitsportionen enthaltenen Flüssigkeitsmengen und des Meßzellenvolumens unter Benützung der Beziehung p.v=R.T der in der Meßzelle jeweils vorliegende Gasdruck hergeleitet wird, der von dem in der zu untersuchenden Flüssigkeit gelöst gewesenen Gas herrührt, und daß der Dampfdruck der Flüssigkeit durch Subtraktion dieses Gasdruckes vom gemessenen Gesamtdruck bestimmt wird.

Es wird so der Wert des absoluten Sättigungsdampfdruckes erhalten.

Durch die erfindungsgemäße Vorgangsweise kann der vorstehend angeführten Zielsetzung gut entsprochen werden, und es ist ein wessentlicher Vorteil dieses Verfahrens, daß es auch eine genaue Messung des Sättigungsdampfdruckes von Flüssigkeitsgemischen ermöglicht. Es ist das erfindungsgemäße Verfahren für das Messen des Dampfdruckes von Kohlenwasserstoffen, die größere Mengen an Gasen, auch Luft, gelöst enthalten können, besonders vorteilhaft.

Beim erfindungsgemäßen Verfahren werden durch das portionsweise Einbringen der zu messenden Flüssigkeit in die Meßzelle und durch das Durchführen von mindestens zwei Messungen bei gleicher Temperatur jedoch unterschiedlicher Meßzellenfüllung mindestens zwei Meßwerte gebildet, in denen die vom Dampfdruck der Flüssigkeit gebildete Druckkomponente jeweils gleich groß ist. Unter Zugrundelegung dieser spezifischen Eigenschaft dieser Meßwerte wird die von den Gasen herrührende Druckkomponente hergeleitet, und es kann nach Kenntnis letzterer Druckkomponente der Dampfdruck der Flüssigkeit aus dem bei jeder Messung erhaltenen Gesamtdruck bestimmt werden.

Es ist im Interesse einer einfachen Verfahrensdurchführung vorteilhaft, wenn die zu messende Flüssigkeit in untereinander gleich großen Portionen in die Meßzelle eingebracht wird.

Zur Erhöhung der Genauigkeit der Meßergebnisse ist es günstig, wenn zur Bestimmung des Gasdruckes mehrere Druckmessungen bei jeweils gleicher Temperatur vorgenommen werden.

Eine sehr einfache Herleitung des Gasdruckes im Rahmen des erfindungsgemäßen Verfahrens ergibt sich, wenn die zu messende Flüssigkeit in zwei gleich großen Portionen in die Meßzelle eingebracht wird, die beiden auf das Einbringen der Portionen in die Meßzelle folgenden Druckmessungen bei der gleichen Temperatur vorgenommen werden und der nach Einbringung der zweiten Flüssigkeitsportion auftretende Gasdruck unter Benützung der Beziehung $p_G=2(p_2-p_1)$ bestimmt wird, wobei $p_1$ und $p_2$ die bei der ersten und der zweiten Druckmessung erhaltenen Meßwerte sind. Zur Erhöhung der Genauigkeit soll bei der Bestimmung des Gasdruckes dabei auch ein Korrekturfaktor angewendet werden, der die Kompression, welche durch das Einbringen der weiteren Portion der zu messenden Flüssigkeit entsteht, berücksichtigt.

Eine weitere Ausführungsform des erfindungsgemäßen Verfahrens, welche auf einfache Weise eine genaue Bestimmung des Verlaufes des Dampfdruckes von Flüssigkeiten über einen Temperaturbereich ermöglicht, ist dadurch gekennzeichnet, daß nach den zur Bestimmung des Gasdruckes vorgenommenen Messungen weitere Druckmessungen bei verschiedenen Temperaturen vorgenommen werden und zur Bestimmung des bei diesen Temperaturen vorliegenden Dampfdruckes der zu untersuchenden Flüssigkeit von den erhaltenen Meßwerten ein unter Benützung der Beziehung p.v=R.T auf die bei der betreffenden Messung herrschende Temperatur korrigierter Wert des Gasdruckes subtrahiert wird.

Man kann zur Durchführung des erfindungsgemäßen Verfahrens eine einfache verschließbare Meßzelle verwenden, welche mit einer Druckmeßvorrichtung versehen ist und mit einem Thermostaten auf vorgegebene Temperaturen gebracht werden kann. Nach Reinigung und Evakuierung dieser Meßzelle auf einen Enddruck unter 1 hPa kann mittels einer an einen Einfüllstutzen der Meßzelle aufsetzbaren Dosierspritze die erste Hälfte der zu messenden Flüssigkeit in die Meßzelle eingebracht werden. In der Meßzelle stellt sich darauf ein Gesamtdruck ein, der aus dem Dampfdruck der Flüssigkeit und dem Gasdruck der in der eingebrachten Flüssigkeitsportion gelöst gewesenen Gase zusammengesetzt ist. Nach dem Temperaturangleich wird dieser Gesamtdruck gemessen. Danach wird die zweite Hälfte der Flüssigkeit mit der Dosierspritze in die Meßzelle eingebracht und neuerlich die Temperaturangleichung und die Einstellung des Sättigungsdampfdruck-Gleichgewichtes abgewartet, wonach wieder der in der Meßzelle herrschende Gesamtdruck gemessen wird. Die zweite Messung wird bei gleicher Temperatur wie die erste Messung vorgenommen. Durch diese Temperaturgleichheit ist der Sättigungsdampfdruck der Flüssigkeit bzw. die durch den Sättigungsdampfdruck gebildete Komponente des Gesamtdruckes bei beiden Messungen gleich groß. Bei der zweiten Messung entspricht der Gasdruck der Gesamtmenge der Gase, welche in den beiden Flüssigkeitsportionen, die in die Meßzelle eingebracht worden sind, gelöst waren.

Es ergeben sich so beim Einfüllen von zwei gleichen Portionen der zu messenden Flüssigkeit in die Meßzelle und bei gleicher Temperatur während der ersten und der zweiten Druckmessung folgende Verhältnisse

$p_1-p_{FL}+p_G$ (m) ... Gesamtdruck in der Meßzelle bei einer Flüssigkeitsmenge m

$p_2-p_{FL}+p_G$ (2m)... Gesamtdruck in der Meßzelle bei einer Flüssigkeitsmenge 2m,

wobei

$p_{FL}$ ... Dampfdruck der Flüssigkeit

$p_G$ (m) ... Gasdruck der in der Flüssigkeitsmenge m gelöst gewesenen Gase

$p_G$ (2m) ... Gasdruck der in der Flüssigkeitsmenge 2m gelöst gewesenen Gase ist.

In erster Näherung kann mit hinreichender Genauigkeit auf Grund der Gasgleichung p.v=R.T bei konstanter Temperatur

$p_G$ (2m)=2($p_G$(m)) gesetzt werden.

Wünscht man eine genauere Herleitung des Gasdruckes, wird die beim Einbringen der zweiten Flüssigkeitsportion auftretende Gaskompression mit einem Korrekturfaktor berücksichtigt, der sich aus dem bekannten Volumen der Meßzelle und aus dem Volumen der eingeführten Flüssigkeitsportionen ergibt.

Aus der vorstehenden Beziehung ergibt sich eine einfache Herleitung des Gasdruckes wie folgt :
$p_2-p_1=(p_{FL}+p_G(2m))-(p_{FL}+p_G(m))$
$p_1$ kann dabei, wie vorstehend, mit einem korrekturfaktor korrigiert sein.
Mit :
$p_G$(2m)=2$p_G$(m) ergibt sich
$p_2-p_1=p_G$(2m)-$p_G$(m) und man erhält
$p_G$(2m)=2($p_2-p_1$).

Der so hergeleitete Gasdruck $p_G$(2m), der von der gesamten in der Meßzelle befindlichen Flüssigkeitsmenge herrührt, wird vom gemessenen Gesamtdruck abgezogen, um den Dampfdruck der Flüssigkeit $p_{FL}$ zu erhalten.

Man kann in analoger Weise die zu messende Flüssigkeit in mehr als zwei Portionen in die Meßzelle einbringen und bei gleicher Temperatur nach dem Einbringen jeder Portion eine Druckmessung vornehmen und aus diesen Messungen in analoger Weise, wie dies vorstehend anhand zweier Druckmessungen erläutert worden ist, den Gasdruck herleiten ; die Herleitung des Gasdruckes aus mehr als zwei Messungen ist aufwendiger als die vorstehend erläuterte Herleitung aus zwei Gesamtdruckmessungen, läßt aber eine größere Genauigkeit erzielen.

Sobald der Gasdruck hergeleitet ist, kann man auch die in der Meßzelle vorliegende Temperatur verändern, um den Dampfdruck bei beliebigen vorgegebenen Temperaturen zu bestimmen. Der zuvor erhaltene Wert des Gasdruckes wird für diese anderen Meßtemperaturen unter Benützung des Gasgleichung p.v=R.T korrigiert bzw. umgerechnet und von den gemessenen Gesamtdruckwerten subtrahiert, um den bei den betreffenden Meßtemperaturen vorliegenden Sättigungsdampfdruck der untersuchten Flüssigkeit zu erhalten. Es kann so eine vollständige Dampfdruckkurve, die auch einen größeren Temperaturbereich erfassen kann, leicht bestimmt werden.

Die erfindungsgemäße Vorrichtung zur Messung des Dampfdruckes von Flüssigkeiten, welche eine Meßzelle und eine an diese Meßzelle angeschlossene Druckmeßeinrichtung sowie eine Fülleitung und einen Vakuumanschluß aufweist, ist dadurch gekennzeichnet, daß die Druckmeßeinrichtung über ein bis nahe an den Boden der Meßzelle reichendes Verbindungsrohr mit der Meßzelle verbunden ist und so die Mündung des Verbindungsrohres unter dem bei der Messung in der Meßzelle vorgesehenen Flüssigkeitsspiegel liegt.

Diese Ausbildung bei der Vorrichtung läßt bei sehr einfachem Aufbau eine gute Genauigkeit der für die Dampfdruckbestimmung erforderlichen Druckmessungen erzielen. Es kann die Druckmeßeinrichtung getrennt von der Meßzelle auf im wesentlichen konstanter Arbeitstemperatur (insbesondere auf Umgebungstemperatur) gehalten werden, wodurch auf einfache Weise Beeinträchtigungen der Genauigkeit der Druckmessung, die durch verschieden große Temperaturen an der Druckmeßeinrichtung entstehen könnten, ausgeschaltet sind, und es ergibt sich dadurch, daß das Verbindungsrohr, welches von der Meßzelle zur Druckmeßeinrichtung führt, unter dem Flüssigkeitsspiegel in die Meßzelle mündet, eine Ausschaltung des Eindringens von Dämpfen der zu messenden Flüssigkeit in das Verbindungsrohr und in die Druckmeßeinrichtung ; damit ist einer Verfälschung der Meßwerte, welche durch eine Kondensation dieser Dämpfe in der Verbindungsleitung oder in der Druckmeßeinrichtung entstehen könnte, vorgebeugt.

Eine bevorzugte Ausführungsform der erfindungsgemäß ausgebildeten Vorrichtung, welche eine sehr einfache Bedienung dieser Vorrichtung ermöglicht, ist dadurch gekennzeichnet, daß an das von der Meßzelle zur Druckmeßeinrichtung führende Verbindungsrohr ein Mehrweghahn angeschlossen ist, von dem die Fülleitung und der Vakuumanschluß ausgehen.

Es ergibt sich ein sehr einfacher Aufbau und auch eine einfache Bedienbarkeit der Vorrichtung, wenn die Meßzelle in einem Festkörperthermostaten angeordnet ist. Dabei wird ein guter Wärmekontakt vom Thermostaten zur Meßzelle und auch eine leichte Zugänglichkeit der Meßzelle im Betrieb erhalten, wenn die Meßzelle an ihrer Außenseite in Längsrichtung konisch geformt ist und der Festkörperthermostat einen Metallblock aufweist, der eine korrespondierend zur Außenseite der Meßzelle geformte Bohrung hat, in die die Meßzelle einsetzbar ist.

Es ergibt sich weiter bei sehr einfachem konstruktiven Aufbau eine gute Einstellbarkeit der Temperatur über einen sehr weiten Temperaturbereich, der von verhältnismäßig weit unter der Umgebungstemperatur liegenden Werten zu hohen Temperaturen reicht, wenn man vorsieht, daß der Festkörperthermostat Peltierelemente zur Temperatureinstellung aufweist.

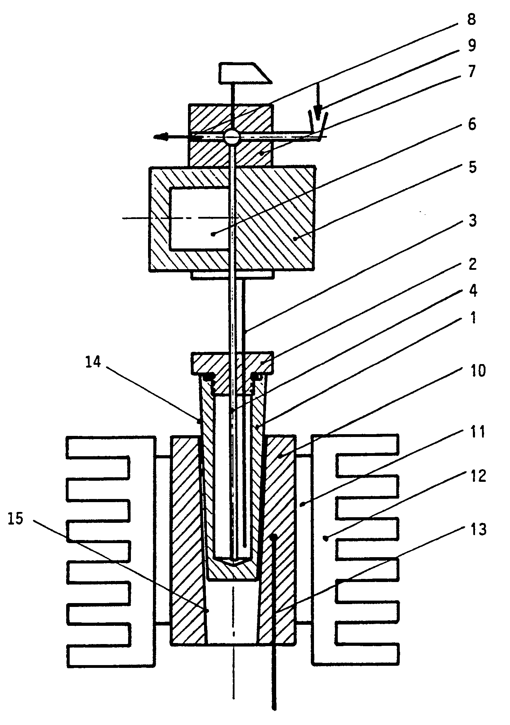

Die Erfindung wird nun unter Bezugnahme auf ein in der Zeichnung dargestelltes Ausführungsbeispiel einer erfindungsgemäß ausgebildeten Vorrichtung weiter erläutert.

Bei der in der Zeichnung dargestellten Vorrichtung ist eine Meßzelle 1 vorgesehen, welche vorteilhaft aus rost- und säurebeständigem Edelstahl besteht. Eine solche Meßzelle kann z.B. ein Volumen von 5 ml haben und in Form eines Zylinders mit 10 mm Innendurchmesser ausgebildet sein. Die Meßzelle 1 ist mit einem aufschraubbaren Verschlußdeckel 2 abgeschlossen, wobei zweckmäßig zur Abdichtung zwischen den Verschlußdeckel 2 und die Meßzelle 1 ein Dichtungsring eingefügt wird. Durch den Verschlußdeckel 2 ist ein Temperaturfühler 3 in das Innere der Meßzelle 1 eingeführt ; ein solcher Temperaturfühler wird zweckmäßig in einer Edelstahlkanüle angeordnet, welche bis in die in der Meßzelle befindliche Flüssigkeit ragt, so daß der Temperaturfühler die Temperatur dieser Flüssigkeit exakt erfaßt. Durch den Verschlußdeckel 2 ist weiter ein Verbindungsrohr 4, welches vorteilhaft gleichfalls in Form einer Edelstahlkanüle ausgebildet ist, in das Innere der Meßzelle 1 eingeführt und ragt bis in den Bodenbereich der Meßzelle. Das Verbindungsrohr 4 führt zu einem Meßkopf 5, in dem eine Druckmeßeinrichtung 6 angeordnet ist. Die Druckmeßeinrichtung kann vorteilhaft in Form eines piezoresistiven Druckgebers ausgebildet sein, welcher derart eingebaut ist, daß das freie Volumen möglichst klein ist. An der Oberseite des Meßkopfes 5 ist in Verlängerung des Verbindungsrohres 4 ein Mehrweghahn 7, der in Form eines Dreiweg-Kugelhahnes ausgebildet ist, dicht aufgesetzt. Vom Mehrweghahn 7 gehen ein Vakuumanschluß 8 und ein Füllstutzen 9 aus. Es kann so über den Mehrweghahn 7 und den Vakuumanschluß 8 die Meßzelle 1 evakuiert und über den Füllstutzen 9 mit der zu untersuchenden Flüssigkeit gefüllt werden. Zum Füllen kann man beispielsweise an den Füllstutzen 9 eine Dosierspritze ansetzen. Es wird dadurch, daß das Verbindungsrohr 4 bis an den Boden der Meßzelle 1 reicht, und damit unter dem im Betrieb in der Meßzelle 1 vorliegenden Flüssigkeitsspiegel ausmündet, dem Eindringen von Gasen aus dem Gasraum der Meßzelle in das Verbindungsrohr 4 und weiter zur Druckmeßeinrichtung 6 entgegengewirkt und es werden solcherart Meßfehler vermieden, welche sich z.B. aus dem Auftreten von Kondensationserscheinungen im Bereich des Verbindungsrohres 4 und im Bereich der Druckmeßeinrichtung 6 ergeben könnten. Die Meßzelle 1 ist an ihrer Außenseite 14 in Längsrichtung konisch geformt und sitzt in einer korrespondierend geformten Bohrung 15, welche in einem Metallblock 10, vorzugsweise einem Aluminiumblock, eines Festkörperthermostaten vorgesehen ist. Im Metallblock 10 ist zur Regelung bzw. Einstellung der Temperatur desselben ein Temperaturfühler 13 angeordnet, welcher Peltierelemente 11 über eine nicht näher dargestellte Steuereinrichtung steuert. Die Peltierelemente 11 sind mit Kühlkörpern 12 thermisch gekoppelt und erlauben eine Einstellung der Temperatur des Metallblockes 10 und damit auch eine Einstellung der Temperatur, welche in der Meßzelle 1 herrscht, auf den jeweils gewünschten Wert. Es kann dabei mit Hilfe dieser Peltierelemente die Temperatur des Metallblockes 10 auf einen im Bereich von –20°C bis 150°C liegenden Wert beliebig eingestellt werden.

Vorteilhaft kann man eine selbsttätige Steuerung der Betriebsvorgänge mit Hilfe eines Steuergerätes vorsehen, welches nacheinander die Messungen im Zuge des in Portionen erfolgenden Füllvorganges der Meßvorgänge steuert und auch selbsttätig die Herleitung des Sättigungsdruckwertes aus den im Zuge der Messungen festgestellten Gesamtdruckwerten vornimmt. Bei der Messung von Dampfdruckkurven kann man bei selbsttätiger Steuerung des Ablaufs der Füll- und Meßvorgänge durch den dabei gegebenen, festgelegten Funktionsablauf die Temperaturänderungen entweder in diskreten Schritten oder auch kontinuierlich mit einstellbarer Rate vornehmen. Man kann die Meßwerte automatisch erfassen, speichern und ausdrucken und, wie erwähnt, aus den Meßwerten selbsttätig die Dampfdruckwerte herleiten und auch die Dampfdruckwerte gewünschtenfalls speichern und ausdrucken. Man kann auch selbsttätig Kurven zeichnende Geräte (Plotter) zum automatischen Darstellen von Dampfdruckkurven einsetzen.

## Ansprüche

1. Verfahren zur Messung des Dampfdruckes von Flüssigkeiten, bei welchem Verfahren die zu messende Flüssigkeit in eine zuvor evakuierte Meßzelle eingebracht wird und der Einfluß von in der Flüssigkeit gelösten Gasen auf das Meßergebnis ausgeschaltet wird, dadurch gekennzeichnet, daß die zu messende Flüssigkeit in zwei oder mehreren Portionen in die zuvor evakuierte Meßzelle eingebracht wird, wobei die auf die erste Flüssigkeitsportion folgende zweite Flüssigkeitsportion bzw. die folgenden Flüssigkeitsportionen jeweils zu der bereits in der Meßzelle befindlichen Flüssigkeit hinzugefügt wird bzw. werden und jeweils nach dem Einbringen einer Portion, nachdem sich das Sättigungsdampfdruck-Gleichgewicht eingestellt hat, der in der Meßzelle vorliegende Gesamtdruck gemessen wird, daß aus mindestens zwei der dabei bei gleicher Meßtemperatur erhaltene Meßwerte, in denen die vom Dampfdruck der Flüssigkeit herrührende Druckkomponente gleich groß ist, unter Berücksichtigung der in den jeweiligen Flüssigkeitsportionen enthaltenen Flüssigkeitsmengen und des Meßzellenvolumens unter Benützung der Beziehung p.v=R.T der in der Meßzelle jeweils vorliegende Gasdruck hergeleitet wird, der von dem in der zu untersuchenden Flüssigkeit gelöst gewesenen Gas herrührt, und daß der Dampfdruck der Flüssigkeit durch Subtraktion dieses Gasdruckes vom gemessenen Gesamtdruck bestimmt wird.

2. Verfahren nach Anspruch 1, dadurch gekennzeichnet, daß die zu messende Flüssigkeit in untereinander gleich großen Portionen in die Meßzelle eingebracht wird.

3. Verfahren nach Anspruch 1 oder 2, dadurch gekennzeichnet, daß zur Bestimmung des Gasdruckes mehrere Druckmessungen bei jeweils gleicher Temperatur vorgenommen werden.

4. Verfahren nach Anspruch 2 oder 3, dadurch gekennzeichnet, daß die zu messende Flüssigkeit in zwei gleich großen Portionen in die Meßzelle eingebracht wird, die beiden auf das Einbringen der Portionen in die Meßzelle folgenden Druckmessungen bei der gleichen Temperatur vorgenommen werden und der nach Einbringung der zweiten Flüssigkeitsportion auftretende Gasdruck unter Benützung der Beziehung $p_G=2(p_2-p_1)$ bestimmt wird, wobei $p_1$ und $p_2$ die bei der ersten bzw. der zweiten Druckmessung erhaltenen Meßwerte sind, und daß vorzugsweise bei der Bestimmung des Gasdruckes auch ein Korrekturfaktor angewendet wird, der die Kompression, welche durch das Einbringen der weiteren Portion der zu messenden Flüssigkeit entsteht, berücksichtigt.

5. Verfahren nach einem der Ansprüche 1 bis 4, dadurch gekennzeichnet, daß nach den zur Bestimmung des Gasdruckes vorgenommenen Messungen weitere Druckmessungen bei verschiedenen Temperaturen vorgenommen werden und zur Bestimmung des bei diesen Temperaturen vorliegenden Dampfdruckes der zu untersuchenden Flüssigkeit von den erhaltenen Meßwerten ein unter Benützung der Beziehung p.v=R.T auf die bei der betreffenden Messung herrschende Temperatur korrigierter Wert des Gasdruckes subtrahiert wird.

6. Vorrichtung zur Messung des Dampfdruckes von Flüssigkeiten, welche Vorrichtung eine Meßzelle (1) und eine an diese angeschlossene Druckmeßeinrichtung (6) sowie eine Fülleitung (9) und einen Vakuumanschluß (8) aufweist, dadurch gekennzeichnet, daß die Druckmeßeinrichtung (6) über ein bis nahe an den Boden der Meßzelle (1) reichendes Verbindungsrohr (4) mit der Meßzelle verbunden ist und so die Mündung des Verbindungsrohres (4) unter dem bei der Messung in der Meßzelle vorgesehenen Flüssigkeitsspiegel liegt.

7. Vorrichtung nach Anspruch 6, dadurch gekennzeichnet, daß an das von der Meßzelle (1) zur Druckmeßeinrichtung (6) führende Verbindungsrohr (4) ein Mehrweghahn (7) angeschlossen ist, von dem die Fülleitung (9) und der Vakuumanschluß (8) ausgehen.

8. Vorrichtung nach Anspruch 6 oder 7, dadurch gekennzeichnet, daß die Meßzelle (1) in einem Festkörperthermostaten angeordnet ist.

9. Vorrichtung nach Anspruch 8, dadurch gekennzeichnet, daß die Meßzelle (1) an ihrer Außenseite (14) in Längsrichtung konisch geformt ist und daß der Festkörperthermostat einen Metallblock (10) aufweist, der eine korrespondierend zur Außenseite den Meßzelle geformte Bohrung (15) hat, in die die Meßzelle (1) einsetzbar ist.

10. Vorrichtung nach Anspruch 8 oder 9, dadurch gekennzeichnet, daß der Festkörperthermostat Peltierelemente (11) zur Temperatureinstellung aufweist.

**Claims**

1. Method of measuring the vapour pressure of liquids, in which method the liquid to be measured is introduced into a previously evacuated measuring cell and the influence of gases dissolved in the liquid upon the measuring result is excluded, characterised in that the liquid to be measured is introduced in two or more portions into the previously evacuated measuring cell, with the second liquid portion, which follows the first liquid portion, or the subsequent liquid portions each being added to the liquid already located in the measuring cell and with the total pressure prevailing in the measuring cell being measured after each introduction of a portion once the saturation vapour pressure equilibrium has set in, in that the gas pressure, which prevails at any one time in the measuring cell and originates from the gas which was dissolved in the liquid to be tested, is derived from at least two of the measured values, which are obtained at the same measuring temperature and in which the pressure component originating from the vapour pressure of the liquid is of equal magnitude, taking into account the liquid quantities contained in the relevant liquid portions and the measuring cell volume using the relation p.v=R.T, and in that the vapour pressure of the liquid is determined by subtracting said gas pressure from the measured total pressure

2. Method according to claim 1, characterised in that the liquid to be measured is introduced in portions of equal size into the measuring cell

3. Methdd according to claim 1 or 2, characterised in that a plurality of pressure measurements are undertaken each at the same temperature to determine the gas pressure.

4. Method according to claim 2 or 3, characterised in that the liquid to be measured is introduced in two portions of equal size into the measuring cell, the two pressure measurements following the introduction of the portions into the measuring cell are undertaken at the same temperature and the gas pressure arising after introduction of the second liquid portion is determined using the relation $p_G=2(p_2-p_1)$, in which $p_1$ and $p_2$ are the measured values obtained during the first and second pressure measurement, and that preferably when determining the gas pressure a correction factor is also used which takes into account the compression which arises as a result of introducing the further portion of the liquid to be measured.

5. Method according to one of claims 1 to 4, characterised in that, after the measurements undertaken to determine the gas pressure, further pressure measurements are undertaken at different temperatures and, to determine the vapour pressure at said temperatures of the liquid to be tested, a gas pressure value which is corrected using the relation $p.v=R.T$ to the temperature prevailing during the relevant measurement is subtracted from the measured values obtained.

6. Apparatus for measuring the vapour pressure of liquids, which comprises a measuring cell (1) and a pressure measuring device (6) connected to said measuring cell as well as a filling line (9) and a vacuum connection (8), characterised in that the pressure measuring device (6) is connected to the measuring cell by a connection pipe (4) which extends almost up to the bottom of the measuring cell (1) so that the mouth of the connection pipe (4) lies below the liquid level provided during measurement in the measuring cell.

7. Apparatus according to claim 6, characterised in that there is connected to the connection pipe (4) leading from the measuring cell (1) to the pressure measuring device (6) a multi-way valve (7) from which the filling line (9) and the vacuum connection (8) originate.

8. Apparatus according to claim 6 or 7, characterised in that the measuring cell (1) is disposed in a solid-state thermostat.

9. Apparatus according to claim 8, characterised in that the exterior (14) of the measuring cell (1) is cone-shaped in a longitudinal direction and that the solid-state thermostat has a metal block (10) with a bore (15) which is shaped to correspond to the exterior of the measuring cell and into which the measuring cell (1) is insertable.

10. Apparatus according to claim 8 or 9, characterised in that the solid-state thermostat has Peltier elements (11) for temperature adjustment.

## Revendications

1. Procédé pour la mesure de la pression de vapeur de liquides, procédé dans lequel le liquide à mesurer est introduit dans une cellule de mesure évacuée au préalable et l'influence des gaz dissous dans le liquide est exclue du résultat de la mesure, caractérisé en ce que le liquide à mesurer est introduit en deux portions ou plus dans la cellule de mesure évacuée au préalable, la seconde portion de liquide ou, respectivement, les portions de liquide suivant la première portion de liquide étant à chaque fois rajoutées au liquide se trouvant déjà dans la cellule de mesure et, après chaque introduction d'une portion, après que se soit établie la pression de vapeur saturante à l'équilibre, la pression totale régnant dans la cellule de mesure est mesurée, en ce qu'en partant d'au moins deux des valeurs de mesure ainsi obtenues pour une température identique de mesure, où la composante de pression provenant de la pression de vapeur du liquide est identique, en considérant les quantités de liquide contenues dans chaque portion de liquide et le volume de la cellule de mesure, en utilisant la relation $p.v=R.T$, on déduit la pression du gaz régnant en tout moment dans la cellule de mesure, qui provient du gaz se trouvant dissous dans le liquide à examiner et en ce que la pression de vapeur du liquide est déterminée par soustractrion de cette pression de gaz de la pression totale mesurée.

2. Procédé selon la revendication 1, caractérisé en ce que le liquide à mesure est introduit dans la cellule de mesure en portions qui sont de grandeur identique.

3. Procédé selon la revendication 1 ou 2, caractérisé en ce que, pour la détermination de la pression de gaz, plusieurs mesures de pression sont entreprises à une température à chaque fois identique.

4. Procédé selon la revendication 2 ou 3, caractérisé en ce que le liquide à mesurer est introduit dans la cellule de mesure en deux portions de même grandeur, les deux mesures de pression suivant l'introduction des portions dans la cellule de mesure sont entreprises à la même température et la pression de gaz qui règne après introduction de la seconde portion de liquide est déterminée en utilisant la relation $p_G=2(p_2-p_1)$ où $p_1$ et $p_2$ sont les valeurs de mesure obtenues à la première et respectivement à la seconde mesure de pression, et en ce qu'avantageusement, dans la détermination de la pression de gaz, on utilise également un facteur de correction qui tient compte de la compression qui résulte de l'introduction de l'autre portion du liquide à mesurer.

5. Procédé selon l'une quelconque des revendications 1 à 4, caractérisé en ce qu'après les mesures entreprises pour la détermination de la pression de gaz, d'autres mesures de pression sont entreprises à diverses températures, et pour la détermination de la pression de vapeur qui règne à ces températures du liquide à examiner, on soustrait des valeurs obtenues de mesure une valeur de la pression de gaz corrigée en utilisant la relation $p.v=R.T$, en fonction de la température qui règne lors de la mesure considérée.

6. Dispositif pour la mesure de la pression de vapeur de liquides, lequel dispositif présente une cellule de mesure (1) et un système de mesure de pression (6) qui lui est raccordé ainsi qu'une conduite de remplissage (9) et un raccordement sous vide (8), caractérisé en ce que le système de mesure de pression (6) est relié à la cellule de mesure par un tube de liaison allant presque jusqu'au fond de la cellule de mesure (1) et ainsi, l'embouchure du tube de liaison (4) se trouve en dessous du niveau du liquide prévu lors de la mesure dans la cellule de mesure.

7. Dispositif selon la revendication 6, caractérisé en ce qu'au tube de liaison (4) menant de la cellule de mesure (1) au système de mesure de pression (6) est raccordé un robinet à plusieurs voix d'où partent la conduite de remplissage (9) et le raccordement au vide (8).

8. Dispositif selon la revendication 6 ou 7, caractérisé en ce que la cellule de mesure (1) est agencée dans un thermostat solide.

9. Dispositif selon la revendication 8, caractérisé en ce que la cellule de mesure (1) est de forme conique sur son côté externe (14) en direction longitudinale et en ce que le thermostat solide présente un bloc de métal (10) qui a un perçage (15) d'une forme correspondant au côté externe de la cellule de mesure, où peut être placée la cellule de mesure (1).

10. Dispositif selon la revendication 8 ou 9, caractérisé en ce que le thermostat solide présente des éléments Peltier (11) pour le réglage de la température.